# EUROPÄISCHE PATENTANMELDUNG

(11) **EP 2 669 726 A1**
(43) Veröffentlichungstag der Anmeldung: **04.12.2013**
(21) Anmeldenummer: 13169722.9
(22) Anmeldetag: 29.05.2013
(51) Int. Cl.: G02B 6/44

(54) **Spleißmodul, Baugruppenträger und Lichtwellenleiter-Verteilerschrank**

(30) Priorität: 29.05.2012 DE 202012101955 U; 29.05.2012 DE 102012208971
(71) Anmelder: VV-Hammer GmbH, 73489 Jagstzell (DE)
(72) Erfinder: Hammer, Ralf, 73489 Jagstzell (DE)
(74) Vertreter: Raunecker, Klaus Peter

(57) **Zusammenfassung**

Die Erfindung betrifft ein Spleißmodul für Einzelfasermanagement, mit einer Frontplatte (21), einer Kassettenträgerplatte (3) und Spleißkassetten (4), wobei auf der Kassettenträgerplatte vertikal übereinander angeordnete Spleißkassetten zur Aufnahme von Spleißverbindungen und der Überlängen zu einem Kassettenstapel (5) angeordnet sind, und eine Patcheinheit (6) auf derselben Kassettenträgerplatte angeordnet ist.

Weitere Aspekte betreffen einen Baugruppenträger sowie einen Lichtwellenleiter-Verteilerschrank, jeweils aufgebaut mit erfindungsgemäßen Spleißmodulen.

## Beschreibung

Die Erfindung betrifft ein Spleißmodul gemäß dem Oberbegriff des Anspruchs 1, einen Baugruppenträger gemäß dem Oberbegriff des Anspruchs 11 sowie einen Lichtwellenleiter-Verteilerschrank gemäß dem Oberbegriff des Anspruchs 13.

Verteilersysteme von Lichtwellenleitern (LWL) bestehen zumeist aus Spleißboxen, Kabelführungskanälen sowie Kabelabfangschienen, die in einem Verteilergehäuse angeordnet sind. Bei den bekannten Lichtwellenleiter-Verteilern dienen die als Spleißboxen bezeichneten Aufnahmekammern zur Trennung der eingebauten Teile in eingangs- und ausgangsseitige Teilbereiche. Die Höhe der Spleißboxen zur Verteilung einer Vielzahl von Lichtwellenleitern bestimmt unter anderem die Bauhöhe des gesamten Verteilersystems.

Aus der Druckschrift EP 2 221 650 A1 ist ein Lichtwellenleiter-Verteilerschrank bekannt, mit in einem Gehäuse angeordneten Spleißmodulen, wobei aus einer Anzahl von vertikal übereinander angeordneten Spleißmodulen ein Spleißmodulstapel ausgebildet ist und zumindest ein Spleißmodul über eine vertikale Achse aus dem Spleißmodulstapel nach außen ausschwenkbar ist.

Des Weiteren ist aus der Druckschrift DE 41 07 228 C2 eine LWL-Spleißbox als nach vorne und oben offener LWL-Spleißauszug ausgebildet. Dieser ist mit zweiteiligen Teleskopauszügen in einen zur Vorderseite offenen Baugruppenträger eingebaut. Eine Frontblende mit LWL-Kupplungen ist im Bereich der vorderen Unterkante des Spleißauszuges abklappbar angeordnet und kann mittels lösbarer Verschlusselemente in der Schließstellung an dem Spleißauszug arretiert werden. Mehrere LWL-Spleißkassetten sind dabei auf einem Zwischenboden des Spleißauszuges übereinander angeordnet. Im Bodenbereich des Spleißauszuges ist unterhalb der Spleißkassetten ein Ablagefach für Patchkabel oder dergleichen ausgebildet.

Aus der Druckschrift DE 40 08 840 C1 ist ein Spleißverteiler für Lichtwellenleiter (LWL) mit LWL-Spleißkämmen bekannt, in denen die LWL-Einzelfasern von ankommenden LWL-Außenkabeln oder LWL-Faserbündeln verteilt werden und mit abgehenden LWL-Einzelfasern verbunden werden können. Die Außenkabel, die LWL-Faserbündel und die LWL-Einzelfasern sind zugentlastet in einem Gehäuse angeordnet. Hierbei wird eine Einheit aus einer Basisträgerplatte, mehreren Trägerplatten mit jeweils mindestens einem LWL-Spleißverteiler und einem Deckel gebildet, die auf einer kleinen Befestigungsfläche übereinander gestapelt werden. Die Trägerplatten bieten die Möglichkeit einer zugentlasteten Zuführung der LWL-Außenkabel, bestehend aus LWL-Faserbündeln mit einer Vielzahl von Einzelfasern.

Es ist Aufgabe der Erfindung, ein Spleißmodul und weitere Baugruppen sowie einen Lichtwellenleiter-Verteilerschrank mit besonders hoher Packungsdichte zu schaffen.

Erfindungsgemäß wird diese Aufgabe bezüglich eines Spleißmoduls mit den in Anspruch 1 genannten Merkmalen, bezüglich eines Baugruppenträgers mit den in Anspruch 11 genannten Merkmalen und bezüglich eines Lichtwellenleiter-Verteilerschranks mit den in Anspruch 13 genannten Merkmalen gelöst. Die weiteren rückbezogenen Ansprüche betreffen vorteilhafte Aus- und Weiterbildungen der Erfindung.

Die Erfindung schließt ein Spleißmodul für Einzelfasermanagement, mit einer Frontplatte, einer Rückwand (24), einer Kassettenträgerplatte und Spleißkassetten ein, wobei auf der Kassettenträgerplatte vertikal übereinander angeordnete Spleißkassetten zur Aufnahme von Spleißverbindungen und der Überlängen zu einem Kassettenstapel angeordnet sind, und eine Patcheinheit auf derselben Kassettenträgerplatte angeordnet ist.

Im erfindungsgemäßen Spleißmodul sind innerhalb desselben Moduls die Patch- und die Spleißverbindungen integriert. Auf diese Weise wird eine Kompaktheit erzielt, welche die Packungsdichte gegenüber bekannten Systemen sogar verdoppeln kann.

Ein besonderer Vorteil der erfindungsgemäßen Lösung ist, dass der Lichtwellenleiter-Verteilerschrank aufgrund der gestapelten Baueinheiten eine hohe Packungsdichte und Bedienerfreundlichkeit, insbesondere bei Einzelfasermanagementsystemen, aufweist. Unter Einzelfasermanagement ist dabei zu verstehen, dass ein Faserbündel im Verteilerschrank in der Weise vereinzelt wird, dass die Fasern eines Bündels (welches oftmals 12 Fasern aufweist) in unterschiedlichen Spleißkassetten gespleißt werden. Dabei kann eine Spleißkassette einen Teilnehmer zugeordnet werden und beispielsweise für lediglich vier Fasern vorgesehen sein. Auf diese Weise wird erreicht, dass die Fasern eines einzelnen Teilnehmers manipuliert, insbesondere gesteckt oder gespleißt werden können, ohne dass andere Teilnehmer davon beeinflusst werden. Bei gleicher Aufstellfläche und Gestellanzahl erhöht sich die Faseranzahl beziehungsweise die Beschaltungsanzahl. Ein ebenfalls wichtiger Aspekt ist der Montageaufwand. Mit vorkonfektionierten oder vormontierten Baugruppen verkürzt sich die Aufbauzeit erheblich und senkt die Montagekosten. Insgesamt ermöglicht die erfindungsgemäße Lösung die knappen Ressourcen von Aufstellfläche für Gestelle mit neuen Raumkonzepten auszuschöpfen.

In bevorzugter Ausführungsform kann eine vertikale Dreheinrichtung zum Ausschwenken oder eine lineare Führung zum Herausziehen aus einem Verteilerschrank vorgesehen sein. Besonders bevorzugt sind über eine vertikale Achse ausschwenkbare Spleißmodule. Hierzu sind meist, von der Frontseite aus betrachtet, auf der rechten oder linken Seite Drehgelenke angeordnet. Denkbar sind allerdings auch Modulstapel, bei denen die jeweiligen Spleißmodule im Stapel alternierend um eine vertikale Achse schwenkbar sind. Mit anderen Worten, die Spleißmodule können zum Spleißmodulstapel verbaut, von der Frontseite her betrachtet, einzeln oder als ganze Stapelteile im Paket wechselseitig auf der linken bzw. rechten Seite drehbar ausgeführt sein. Im eingeklappten Zustand können auch Arretierungseinrichtungen am Spleißmodul für eine definierte Schließstellung sorgen. Die bevorzugte Lösung kommt also mit einem Schwenkvorgang aus, bei dem die zurückgelegten Wegstrecken so begrenzt sind, dass gegenüber herkömmlichen Spleißverteilern nur mit geringer oder gar keiner Kabelüberlänge gearbeitet werden muss.

Vorteilhafterweise können Kabelführungen nahe am Drehpunkt einer vertikalen Dreheinrichtung angeordnet sein. Die Kabelführungen dienen als Fixierung der Patchkabel auf der Kabelebene. Durch eine Führung der Kabel nahe am Drehpunkt wird beim Ausschwenken eines Spleißmoduls eine definierte Biegung mit geringen Schub- oder Druckkräften an den Kabeln bewirkt.

In bevorzugter Ausführungsform können Kabelhalterungen entlang der Rückwand angeordnet sein, entlang denen Kabel zur Dreheinrichtung hin verlegbar sind. Die rückseitig in Kabelröhrchen eingeführten Kabel sind an der Rückwand in Haltern fixierbar und werden bis an den Drehpunkt der Spleißmodule verlegt. Im Inneren eines Spleißmoduls werden die Kabelröhrchen mittels Stehbolzen und aufgesetzten Haltebriden befestigt und zur unteren Faserablage mit Überlängenablagemöglichkeit geführt. Nach hinten ansteigende Fasern werden in eine Einfädelkontur als Übergang zu den Spleißkassetten eingeführt. An der Rückwand des Spleißmoduls sind Spleißkassettenhalter angebracht, die beispielsweise mit sechs Kassetten bestückt sind. Insbesondere können einer, zwei oder drei Spleißkassettenhalter Verwendung finden. Die Spleißkassetten sind klappbar und rasten beispielsweise durch eine Vierkantkontur im axialen Drehpunkt unter 0° und 90° ein.

Vorteilhafterweise kann die Höhe des Spleißmoduls lediglich eine oder eine halbe Höheneinheit betragen. Insbesondere kann die Höhe ein Vielfaches einer halben Höheneinheit, insbesondere zwei, eineinhalb, eine oder eine halbe Höheneinheit betragen. In besonders bevorzugter Ausführungsform kann jedes Spleißmodul eine halbe Höheneinheit aufweisen. Eine Höheneinheit als standardisierte Maßeinheit für die Höhe eines Elektronikgehäuses entspricht 1¾ Zoll. In jedem Spleißmodul kann dabei frontseitig immer noch eine Anschlussleiste positioniert werden. Hierdurch wird eine besonders kompakte Einheit mit sehr hoher Packungsdichte gebildet.

In einer vorteilhaften Ausgestaltung der Erfindung können die Spleißkassetten zur Ausbildung von Cross-Connect Verbindungen geeignet sein. Beim Cross-Connect besteht mittels einer Durchführung in der Spleißkassette die Möglichkeit, Kabelenden für hochbitratige Verbindungen zu spleißen und so variabel zu verschalten.

In einer weiteren vorteilhaften Ausführungsform können an der Frontplatte die Steckverbindungen der Patcheinheit angeordnet sein. Insbesondere ist von Vorteil, dass bei Schwenkbewegungen die Spleißkassetten und die Patcheinheit auf derselben Kassettenträgerplatte befestigt sind. Kabel müssen dabei durch verringerte Wegstecken beim Verlegen auch nicht nachgeführt werden.

Vorteilhafterweise kann vor der Frontplatte eine Abdeckplatte als frontseitiger Schutz für Patchkabel angeordnet sein. Die Abdeckplatte schützt die Patchkabel, welche in die optischen Verbindungskuppler eingesteckt sind, an der Vorderfront insbesondere gegenüber mechanischen Einwirkungen.

In bevorzugter Ausführungsform kann die Abdeckplatte als vertikal schwenkbares Blech ausgebildet sein. Bevorzugt handelt es sich aus Stabilitätsgründen um ein L-förmiges Blech. Sofern ein Drehgelenk eines ausschwenkbaren Spleißmoduls, von der Frontseite aus betrachtet, auf der rechten bzw. linken Seite angeordnet ist, ist der Drehpunkt des vertikal schwenkbaren Blechs links bzw. rechts angesetzt. Dies vereinfacht ganz wesentlich die Kabelführung der Patchkabel zur Kontaktierung an die optischen Verbindungskuppler der Patcheinheit indem das Blech aus dem benötigten Arbeitsraum herausgeklappt wird.

Ein weiterer Vorteil kann resultieren, wenn die Spleißkassetten im Kassettenstapel durch einen Klappmechanismus zugänglich sind. Durch den Klappmechanismus kann jede Spleißkassette im Stapel aufgeklappt werden, so dass das Innere zugänglich ist.

Als weiterer Aspekt der Erfindung können mehrere übereinander als kompakte Einheit angeordnete erfindungsgemäße Spleißmodule als Baugruppenträger ausgebildet sein. Beispielsweise sind dies drei höhengleiche ausschwenkbare Spleißmodule als Einschübe mit gemeinsamem Drehpunkt rechts- oder linksseitig. Die Einschübe sind in geschlossener Position bevorzugt durch einen Druckverschluss verriegelbar. Jeder Einschub bietet beispielsweise die Möglichkeit 24 Glasfaser-Steckverbindungen in SC-Bauweise als Standard-Steckverbinder oder von 48 Glasfaser-Steckverbindungen in LC-Bauweise als Miniatur-Steckverbinder aufzunehmen. Somit ergibt sich eine gesamte Kapazität von 72SC oder 144LC Verbindungen. Es können auch Varianten der oben genannten Anordnungen in verschiedenen Höheneinheiten gewählt werden.

In bevorzugter Ausgestaltung kann die Höhe eines Spleißmoduls drei oder fünf Höheneinheiten betragen. Beispiele hierfür sind Baugruppenträger mit den Einbaumaßen: 125 mm hoch, 534 mm breit und 270 mm tief. Mit diesen Abmaßen passt der Baugruppenträger in einen 19"-Verteilerschrank und nimmt dort drei Höheneinheiten ein. Ebenso passt der Baugruppenträger in einen ETSI-Standard Verteilerschrank, wo dieser fünf Höheneinheiten von jeweils 25 mm einnimmt.

Ein weiterer Aspekt der Erfindung betrifft einen Lichtwellenleiter-Verteilerschrank, mit in einem Gehäuse angeordneten Spleißmodulen mit einer Frontplatte, einer Kassettenträgerplatte und Spleißkassetten, wobei aus einer Anzahl von vertikal übereinander angeordneten Spleißmodulen oder Baugruppenträgern ein Spleißmodulstapel ausgebildet ist. Des Weiteren sind auf einer Kassettenträgerplatte vertikal übereinander liegende Spleißkassetten zur Aufnahme von Spleißverbindungen und der Überlängen zu einem Kassettenstapel angeordnet. Zudem ist eine Patcheinheit auf derselben Kassettenträgerplatte vorhanden.

Das Gehäuse eines Verteilerschranks, ausgeführt als Standschrank umfasst eine Abdeckung im Boden- und Deckelbereich, optional auch Seitenteile. Eine vordere Fronttüre ist entweder einteilig oder auch mehrteilig ausgeführt, um einen erleichterten Zugang zu öfter frequentierten Teilbereichen im Verteilerschrank zu gewährleisten. Meist werden derartige Verteilerschränke von der Frontseite aus bedient. Weiter ausgebildet ist ein Einführungskabelkanal für Lichtwellenleiter, um eine getrennte Führung der ankommenden und abgehenden Kabel zu gewährleisten.

In einem Modulstapel können auch alle Spleißmodule über eine vertikale Achse nach außen ausschwenkbar ausgeführt sein. Hierzu sind meist, von der Frontseite aus betrachtet, auf der rechten oder linken Seite Drehgelenke angeordnet. Denkbar sind allerdings auch Modulstapel, bei denen die jeweiligen Spleißmodule im Stapel alternierend um eine vertikale Achse schwenkbar sind. Mit anderen Worten, die Spleißmodule können im Spleißmodulstapel, von der Frontseite her betrachtet, einzeln oder als ganze Stapelteile im Paket wechselseitig auf der linken bzw. rechten Seite drehbar ausgeführt sein. Im eingeklappten Zustand können auch Arretierungseinrichtungen am Spleißmodul für eine definierte Schließstellung sorgen.

In einer vorteilhaften Ausgestaltung der Erfindung können in einem Spleißmodul für Einzelfasermanagement bis zu 24 Fasern angeschlossen sein. In einem Modul können zwei Spleißkassettenstapel für jeweils 12 Fasern angeordnet sein. Derartige kleine Baugruppen gewährleisten eine übersichtliche Handhabung beim Anschließen der Lichtwellenleiter aus Kabelbündeln an der Frontseite eines Spleißmodulstapels. Hierdurch werden Montagezeiten wesentlich reduziert.

In einer weiteren vorteilhaften Ausführungsform können 1008 Fasern gepatcht und gespleißt in einem Gestell angeordnet sein. Bei gleicher Aufstellfläche und Gestellanzahl verdoppelt sich aufgrund sehr hoher Packungsdichte die Faserbeziehungsweise Beschaltungszahl.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigt:
- Fig. 1: schematisch eine Schrägansicht eines Spleißmoduls;
- Fig. 2: schematisch eine Seitenansicht eines Spleißmoduls gemäß Fig. 1;
- Fig. 3: schematisch eine Vorderansicht eines Spleißmoduls gemäß Fig. 1;
- Fig. 4: schematisch eine Schrägansicht eines Spleißmoduls mit Kabelführung;
- Fig. 5: schematisch eine Schrägansicht eines Baugruppenträgers aus drei Spleißmodulen mit Patchkabeln;
- Fig. 6: schematisch in einer Schrägansicht das Innere eines Baugruppenträgers aus Fig. 5;
- Fig. 7: schematisch eine Schrägansicht eines Baugruppenträgers mit herausgeklapptem oberen Spleißmodul;
- Fig. 8: schematisch eine Frontansicht eines Lichtwellenleiter-Verteilerschranks.

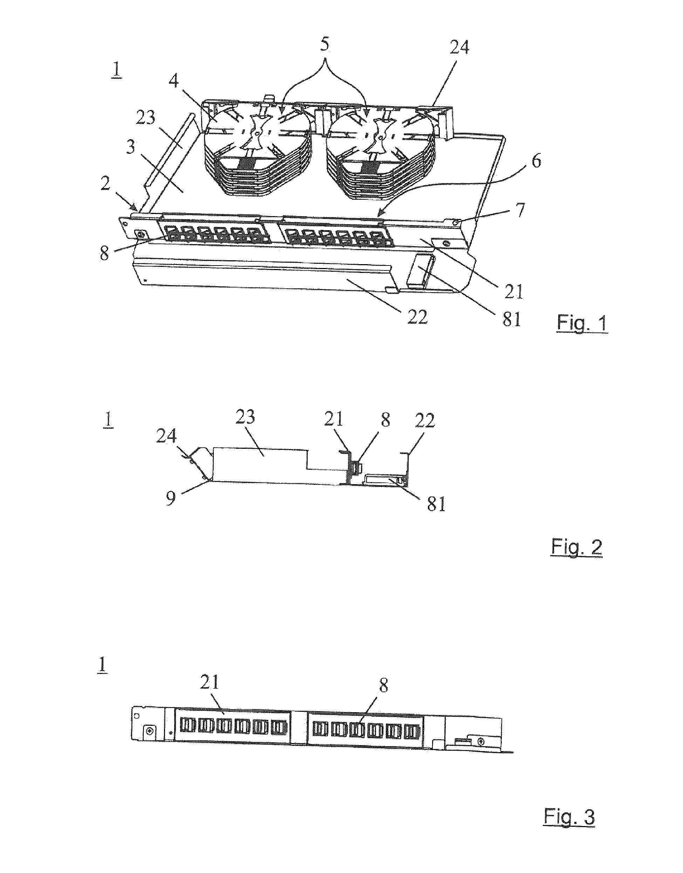

Fig. 1 zeigt schematisch eine Schrägansicht eines Spleißmoduls 1 für Einzelfasermanagement. Das Spleißmodul 1 weist eine Kassettenträgerplatte 3 auf, an deren Randbereich Seitenwände 2 angebracht werden oder aus Material der Trägerplatte gefalzt sind. Die Seitenwand 23 trägt vorwiegend zur Stabilität des gesamten Moduls bei.

Auf der Kassettenträgerplatte 3 sind vertikal übereinander angeordnete Spleißkassetten 4 zur Aufnahme der Spleißverbindungen und der Überlängen zu einem Kassettenstapel 5 angeordnet. Die Patcheinheit 6 ist mit auf der Frontplatte 21 vorhandenen Steckerverbindungen 8 auf derselben Kassettenträgerplatte 3 angeordnet. Parallel zur Frontplatte 21 ist eine Abdeckplatte 22 als Blende in einem gewissen Abstand positioniert.

Im Spleißmodul 1 befinden sich in diesem Falle zwei Kassettenstapel 5, um 2 x 12 in der Figur nicht weiter dargestellte Lichtwellenleiter an die Steckverbindungen 8 anschließen zu können. Zur Kabelführung zwischen den Spleißkassetten 4 und der Patcheinheit 6 mit den Steckverbindungen 8 werden in der Figur nicht dargestellte Führungsschläuche eingesetzt. Die Spleißkassetten 4 sind mit der Rückwand 24 durch einen Klappmechanismus zugänglich. Durch den Klappmechanismus kann jede Spleißkassette 4 im Stapel aufgeklappt werden.

Eine Dreheinrichtung 7 ist in Figur 1 auf der rechten Seite als Bohrung ausgeführt, in die im montierten Zustand eine Steckachse hindurchführt, um ein vertikales Drehgelenk auszubilden. Dadurch sind die Spleißmodule 1 ausschwenkbar.

Fig. 2 zeigt schematisch eine Seitenansicht eines Spleißmoduls 1 mit einer stabilisierenden Seitenwand 23. Der Abstand der Frontplatte 21 von der Abdeckplatte 22 ist so gewählt, dass die Steckverbindungen 8 frei zugänglich sind.

Sichtbar ist auch der Klappmechanismus 9, durch den die Rückwand 24 jeder Spleißkassette im Stapel aufgeklappt werden kann, so dass das Innere zugänglich ist.

Fig. 3 zeigt eine Vorderansicht eines Spleißmoduls 1 auf der Ebene der Frontplatte 21. In der Frontplatte 21 sind 2 x 6-Steckverbindungen 8 der Patcheinheit montiert, von denen aus weitere Verteilerkabel weggeführt werden können.

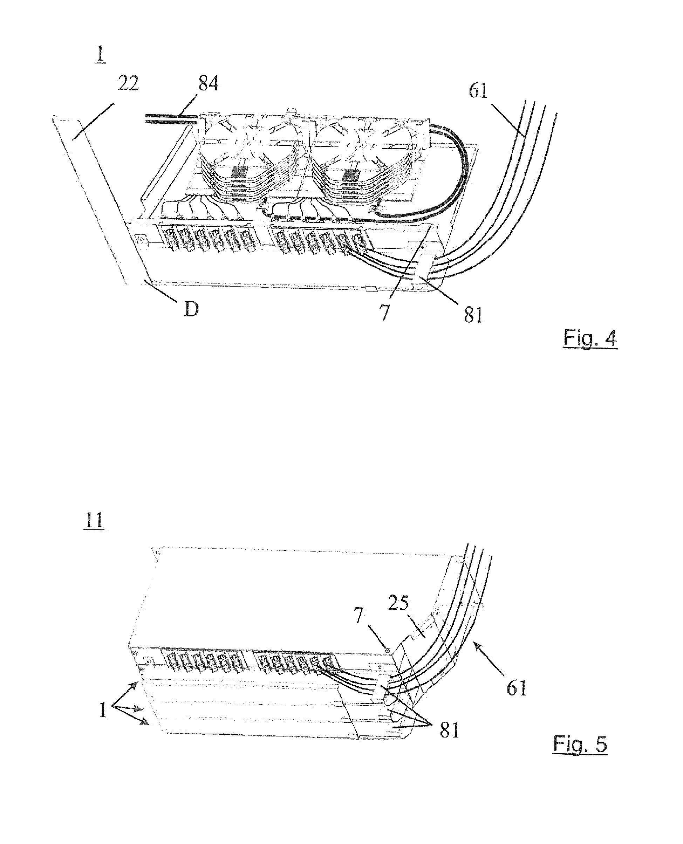

Fig. 4 zeigt schematisch eine Schrägansicht eines Spleißmoduls 1 mit Kabelführung einiger Patchkabel 61. In diesem Montagestadium ist die Abdeckplatte 22 vertikal nach oben geschwenkt. In diesem Falle ist die Dreheinrichtung 7 des ausschwenkbaren Spleißmoduls 1 auf der rechten Seite angeordnet. Deshalb ist der Drehpunkt D der Abdeckplatte 22 links angesetzt. Die Fig. 4 verdeutlicht, dass der Arbeitsraum zur Kabelführung der Patchkabel 61 bis zur Kontaktierung an die optischen Verbindungskuppler der Patcheinheit hierdurch frei zugänglich ist. Die rückseitig in Kabelröhrchen 84 eingefügten Kabel sind von der Rückwand herkommend geführt und werden nahe an der Dreheinrichtung 7 der Spleißmodule über Kabelführungen 81 vorbeigeleitet.

Fig. 5 zeigt schematisch eine Schrägansicht eines Baugruppenträgers 11 aus drei Spleißmodulen 1 mit Patchkabeln 61. Zur Halterung der Patchkabel 61 sind Kabelführungen 81 nahe am Drehpunkt der vertikalen Dreheinrichtung 7 angeordnet. Die Kabelführungen 81 fixieren die Patchkabel 61 auf der Kabelebene, beispielsweise durch einen Kunststoffclip mit innen liegendem Schaumstoff. Durch die Fixierung der Patchkabel 61 nahe am Drehpunkt des Spleißmoduls 1 wird eine definierte Biegung eingestellt, wodurch nur geringe mechanische Kräfte auf die Kabel einwirken. Ein rechtsseitig angebrachtes Blech 25 schrägt eine Ecke des Baugruppenträgers 11 ab und stellt für die Patchkabel 61 ausreichend Raum zur Verfügung, um einen geeigneten Biegeradius einzustellen.

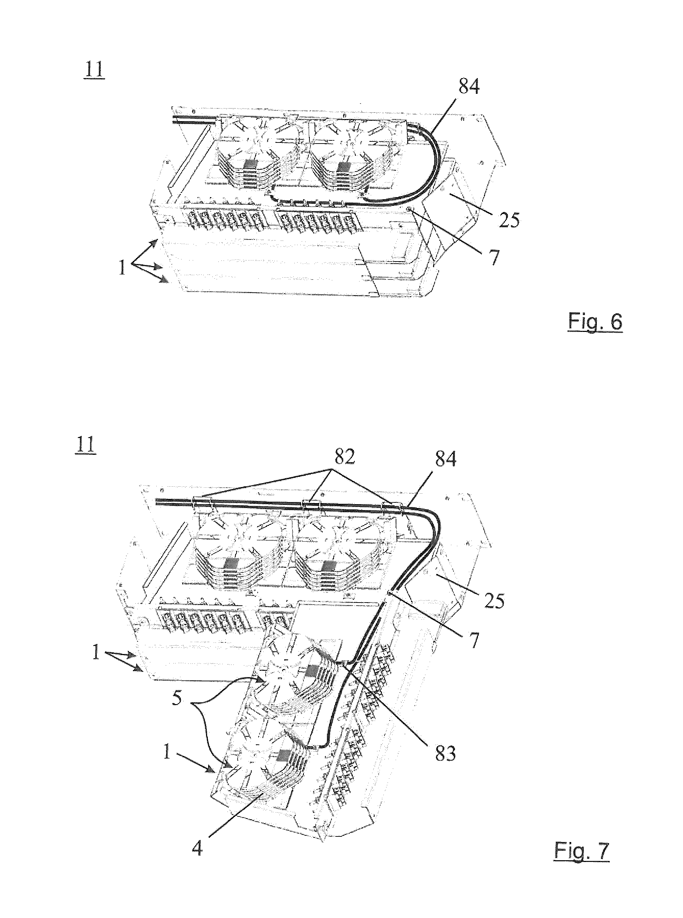

Fig. 6 zeigt schematisch in einer Schrägansicht das Innere eines Baugruppenträgers 11 aus Fig. 5 mit drei Spleißmodulen 1. Die rückseitig in Kabelröhrchen 84 eingeführten Kabel sind von der Rückwand herkommend geführt und werden nahe an der Dreheinrichtung 7 der Spleißmodule vorbeigeleitet. Das rechtsseitig angebrachte Blech 25 schützt dabei die Kabelröhrchen 84 vor mechanischen Einflüssen.

Fig. 7 zeigt schematisch eine Schrägansicht eines Baugruppenträgers 11 mit herausgeklapptem oberen Spleißmodul 1. Die zwei weiteren unteren Spleißmodule 1 befinden sich in eingeklappter und verriegelter Stellung. Die untere Faserablage besitzt die Möglichkeit die Röhrchen der Pigtails mittels Fixierungen 83 zu halten, um die Fasern sicher in einen Spleißkassettenstapel 5 zu führen. Die Spleißkassetten 4 sind im Innern mit nicht in den Figuren dargestellten Biegeradienbegrenzern und Faserniederhaltern sowie Ablagemöglichkeit für eine Vielzahl von Crimpspleissschutzelementen ausgestattet. Es können aber auch Spleißkassetten 4 mit anderer Bauform zum Einsatz kommen. Eine Nummerierung der Glasfaser-Anschlüsse kann als farbiges Etikett mit Sicherheitshinweis auf Laserstrahlung in der Kabelebene angebracht sein.

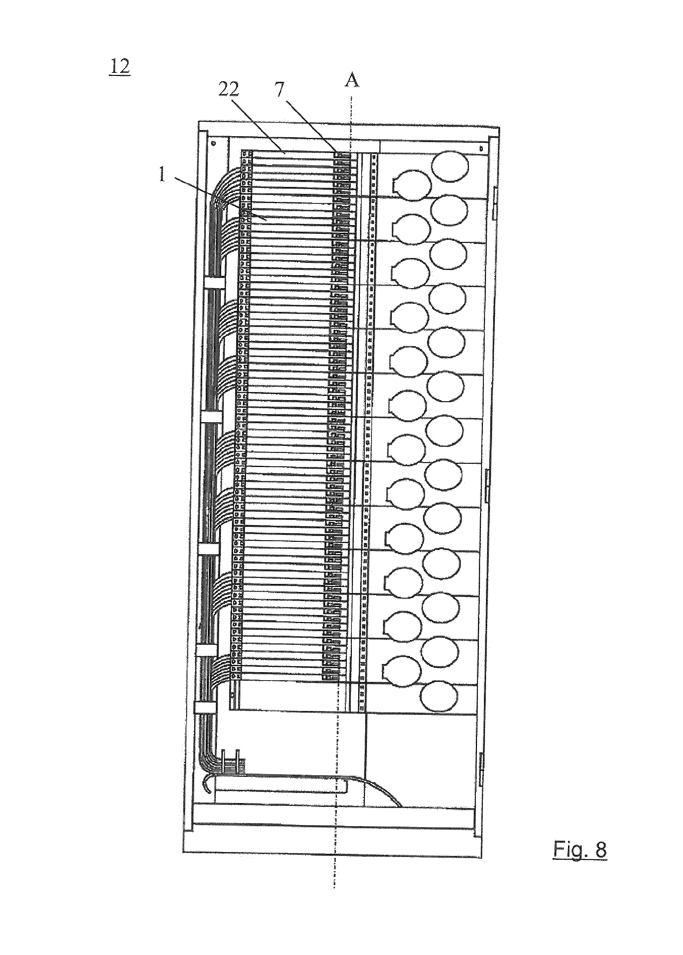

Fig. 8 zeigt schematisch eine Frontansicht eines Lichtwellenleiter-Verteilerschranks 12 mit Spleißmodulen 1. Das Gehäuse des Verteilerschranks 12 ist als Standschrank mit einer Bodenabdeckung und einer Deckelabdeckung ausgeführt und mit senkrechten Seitenteilen versehen. In diesem Falle ist der Verteilerschrank 12 von der Frontseite aus zugänglich, die gegebenenfalls mit einer Fronttüre verschlossen werden kann.

Die Schublade eines Spleißmoduls 1 kann herausgeschwenkt und das Kabelbündel unter Einhaltung des zulässigen Biegeradius eingezogen werden. Bevor die einzelnen Lichtwellenleiter an Steckern angeschlossen werden können, müssen die Bündeladern mit einem geeigneten Werkzeug geöffnet und gereinigt werden, um diese zum Spleißen vorzubereiten. Die um eine vertikale Achse A aus dem Spleißmodulstapel um die Dreheinrichtung 7 schwenkbaren Spleißmodule 1 gewährleisten einen leichten Zugang beim Verlegen und Anschließen der Lichtwellenleiter.

### Bezugszeichenliste:

| | |
|---|---|
| 1 | Spleißmodul |
| 2 | Seitenwände |
| 21 | Frontplatte |
| 22 | Abdeckplatte |
| 23 | Seitenwand |
| 24 | Rückwand |
| 25 | Blech |
| 3 | Kassettenträgerplatte |
| 4 | Spleißkassetten |
| 5 | Kassettenstapel |
| 6 | Patcheinheit |
| 61 | Patchkabel |
| 7 | Dreheinrichtung |
| 8 | Steckverbindungen |
| 81 | Kabelführungen |
| 82 | Kabelhalterungen |
| 83 | Fixierung |
| 84 | Kabelröhrchen |
| 9 | Klappmechanismus |
| 11 | Baugruppenträger |
| 12 | Lichtwellenleiter-Verteilerschrank |
| A | Vertikalachse |
| D | Drehpunkt |

## Patentansprüche

1. Spleißmodul (1) für Einzelfasermanagement, mit einer Frontplatte (21), einer Rückwand (24), einer Kassettenträgerplatte (3) und Spleißkassetten (4),
**dadurch gekennzeichnet,**
- **dass** auf der Kassettenträgerplatte (3) vertikal übereinander angeordnete Spleißkassetten (4) zur Aufnahme von Spleißverbindungen und der Überlängen zu einem Kassettenstapel (5) angeordnet sind,
- **dass** eine Patcheinheit (6) auf derselben Kassettenträgerplatte (3) angeordnet ist.

2. Spleißmodul (1), nach Anspruch 1,
**gekennzeichnet durch**
eine vertikale Dreheinrichtung (7) zum Ausschwenken oder eine lineare Führung zum Herausziehen aus einem Verteilerschrank.

3. Spleißmodul (1), nach Anspruch 2,
**dadurch gekennzeichnet, dass** Kabelführungen (81) nahe am Drehpunkt einer vertikalen Dreheinrichtung (7) angeordnet sind.

4. Spleißmodul (1), nach einem der Ansprüche 1 bis 3,
**dadurch gekennzeichnet, dass** Kabelhalterungen (82) entlang der Rückwand (24) angeordnet sind, entlang denen Kabel zur Dreheinrichtung (7) hin verlegbar sind.

5. Spleißmodul (1), nach einem der Ansprüche 1 bis 4,
**dadurch gekennzeichnet, dass** dessen Höhe ein Vielfaches einer halben Höheneinheit, insbesondere zwei, eineinhalb, eine oder eine halbe Höheneinheit beträgt.

6. Spleißmodul (1), nach einem der Ansprüche 1 bis 5,
**dadurch gekennzeichnet, dass** die Spleißkassetten (4) zur Ausbildung von Cross-Connect Verbindungen geeignet sind.

7. Spleißmodul (1), nach einem der Ansprüche 1 bis 6,
**dadurch gekennzeichnet, dass** an der Frontplatte (21) die Steckverbindungen (8) der Patcheinheit (6) angeordnet sind.

8. Spleißmodul (1), nach einem der Ansprüche 1 bis 7,
**dadurch gekennzeichnet, dass** vor der Frontplatte (21) eine Abdeckplatte (22) als frontseitiger Schutz für Patchkabel angeordnet ist.

9. Spleißmodul (1), nach Anspruch 8,
**dadurch gekennzeichnet, dass** die Abdeckplatte (22) als schwenkbares, insbesondere horizontal oder schwenkbares Blech ausgebildet ist.

10. Spleißmodul (1), nach einem der Ansprüche 1 bis 9,
**dadurch gekennzeichnet, dass** die Spleißkassetten (4) im Kassettenstapel (5) durch einen Klappmechanismus (9) zugänglich sind.

11. Baugruppenträger (11),
**gekennzeichnet durch**
mehrere übereinander als kompakte Einheit angeordnete Spleißmodule (1) gemäß einem der Ansprüche 1 bis 10.

12. Baugruppenträger (11), nach Anspruch 11,
**dadurch gekennzeichnet, dass** die Höhe eines Spleißmoduls (1) drei oder fünf Höheneinheiten beträgt.

13. Lichtwellenleiter-Verteilerschrank (12), mit in einem Gehäuse angeordneten Spleißmodulen (1) mit einer Frontplatte (21), einer Kassettenträgerplatte (3) und Spleißkassetten (4),
**dadurch gekennzeichnet,**
- **dass** aus einer Anzahl von vertikal übereinander angeordneten Spleißmodulen (1) oder Baugruppenträgern (11) ein Spleißmodulstapel ausgebildet ist,
- **dass** auf einer Kassettenträgerplatte vertikal übereinander liegende Spleißkassetten (4) zur Aufnahme von Spleißverbindungen und der Überlängen zu einem Kassettenstapel (5) angeordnet sind, und
- **dass** eine Patcheinheit (6) auf derselben Kassettenträgerplatte (3) angeordnet ist.

14. Lichtwellenleiter-Verteilerschrank (12) nach Anspruch 13,
**dadurch gekennzeichnet, dass** in einem Spleißmodul (1) bis zu 48 Fasern angeschlossen sind.

15. Lichtwellenleiter-Verteilerschrank (12) nach Anspruch 13 oder 14,
**dadurch gekennzeichnet, dass** 1008 Fasern gepatcht und gespleißt angeordnet sind.
